# EUROPÄISCHE PATENTSCHRIFT

(11) **EP 1 109 003 B1**
(45) Veröffentlichungstag und Bekanntmachung des Hinweises auf die Patenterteilung: **23.06.2004**
(21) Anmeldenummer: 00125974.6
(22) Anmeldetag: 28.11.2000
(51) Int. Cl.: G01M 3/28

(54) **Verfahren und Vorrichtung zum Prüfen von porösen Rohren o. dgl. auf Dichtheit**
Method and device for the leak testing of porous pipes and the like
Procédé et dispositif d'essai d'étanchéité de tuyaux poreux ou similaire

(30) Priorität: 02.12.1999 DE 19957998
(43) Veröffentlichungstag der Anmeldung: 20.06.2001
(73) Patentinhaber: Messmann, Annemarie, 26871 Papenburg (DE)
(72) Erfinder: Messmann, Martin, 26871 Papenburg (DE)
(74) Vertreter: Strauss, H.-J., Dr.

(56) Entgegenhaltungen:
- DE-A- 4 307 283
- DE-A- 4 407 309
- DE-A- 4 445 883
- GB-A- 1 436 128

## Beschreibung

Die Erfindung betrifft ein Verfahren zum Prüfen von Rohren aus Beton, Steinzeug oder Guss auf Dichtheit mit Hilfe einer Vakuumprüf-Vorrichtung; sie betrifft ferner eine Vorrichtung zum Durchführen des Verfahrens, mit einem Auflager für den Prüfling, Mittel zum beidseitigen Abdichten des Prüflings, wobei eine der Abdichtungen mit einer Vakuumpumpe verbunden ist, sowie mit Mitteln zum Messen des Unterdruckes.

Die Erfindung geht aus von den bekannten Prüfverfahren für Rohre aus Steinzeug, Ton, Beton oder ähnlichen porösen Werkstoffen, bei denen beide Rohrenden mittels mit Dichtungen versehenen Prüfplatten verschlossen werden. Solche Verfahren und Vorrichtungen dafür sind in DE 43 07 283. DE 44 445 883. DE 44 07 309 oder in GB 1 436 128 beschrieben. Wird in dem beidseits abgedichteten Prüfling mittels der angeschlossenen Vakuumpumpe ein Unterdruck gezogen, kann aus dem Abfall des Vakuums nach dem Abschalten des Absaugens auf die Grad-Dichtheit des Prüflings geschlossen werden. Dieser Schluss ist jedoch dann unsicher, wenn sich der Innendruck im Prüfling nach dem Stoppen des Absaugens durch Temperaturänderungen verändert. Daher kann eine aussagekräftige Messung erst dann durchgeführt werden, wenn ein stationäres Gleichgewicht hinsichtlich der Temperatur erreicht ist. Die Anwendung solcher Verfahren ist insbesondere bei Takt-Fertigung nachteilig, da nicht hinreichend lange zugewartet werden kann, wie es zum Einstellen des stationären Gleichgewichts notwendig wäre. Dieses Einstellen wird dabei insbesondere durch die für die adiabatische Entspannung der Luft beim Vakuum-Ziehen verbrauchte Wärmeenergie verzögert. Eine weitere Verzögerung bewirkt das Verdunsten vom immer noch in Poren enthaltenem Restwasser, das eine Abkühlung des (Rest-) Luftinhaltes im Prüfling bewirkt und so eine Absenkung des Druckes, wodurch eine Dichtheit vorgetäuscht wird, die nicht gegeben ist.

Hier setzt die Erfindung ein, der die Aufgabe zugrunde liegt, ein gattungsgemäßes Verfahren anzugeben, dass das Einstellen des stationären Gleichgewichts beschleunigt und bei Taktfertigungen eine Verkürzung der Prüfungszeit bewirkt; ferner ist es Aufgabe der Erfindung, eine zum Durchführen des Verfahrens geeignete, gattungsgemäße Vorrichtung anzugeben, mit der die Vakuumprüfung auch bei kurzen Taktzeiten sicher und ungestört durchgeführt werden kann.

Nach der Erfindung wird diese Aufgabe hinsichtlich des Verfahrens gelöst durch die in unabhängigen Anspruch 1, und hinsichtlich der Vorrichtung durch die in dem Anspruch 7 angegebenen Merkmale: vorteilhafte Weiterbildungen und bevorzugte Ausführungsformen des Verfahrens sowie der Vorrichtung beschreiben die abhängigen Ansprüche.

Zur Prüfung wird in dem Ausgleichsbehälter ein Unterdruck erzeugt und die in ihm enthaltene Luft wird auf der Temperatur gehalten, die im Wesentlichen der Temperatur der Innenwand des Prüflings entspricht. Der Prüfling wird in die Vakuumprüfvorrichtung beidseitig abgedichtet eingesetzt und mit dem Ausgleichsbehälter verbunden, wobei zumindest eine der Kreislauf-Rohrleitungen zunächst noch mit Absperrventilen geschlossen ist. Dann wird in dem Prüfling mit der angeschlossenen Vakuumpumpe ein dem Unterdruck in dem Ausgleichsgefäß entsprechender Unterdruck erzeugt. Während dieser Zeit bleibt die Verbindung zwischen Prüfling und Ausgleichsbehälter zumindest einseitig geschlossen, so dass ein Luftaustausch nicht eintreten kann. Erst nach Erreichen des entsprechenden Unterdruckes wird die Luft im Prüfling durch die im Ausgleichsbehälter enthaltende, temperierte Luft ersetzt. Dabei wird die kältere Luft im Prüfling in den Ausgleichsbehälter gefördert, wodurch die dort vorhandene wärmere Luft verdrängt und in den Prüfling überführt wird. Nach dem Austausch der Volumina wird die Verbindung des Prüflings mit dem Ausgleichsbehälter wieder verschlossen. Nun entspricht die Temperatur der Restluft im Prüfling in guter Näherung der Wandtemperatur und es ist damit ein thermischer Gleichgewichtszustand erreicht. Der Unterdruck im Prüfling wird nun auf Messunterdruck gebracht und der Druckverlauf wird über eine gewisse Messdauer beobachtet, wobei bei dessen Abfall über vorgegebene Toleranzgrenzen das Rohr undicht ist und ausgesondert wird. Nach der Prüfung wird ein neuer Prüfling in die Vakuumprüfvorrichtung eingesetzt; während dieses Zeitraumes bleibt die Verbindung zwischen dem Prüfling und dem Ausgleichsvolumen abgesperrt. Erst wenn dieser Prüfling wieder auf den Prüfunterdruck gebracht worden ist, werden die beiden Luftvolumina - wie vorbeschrieben - ausgetauscht.

Vorteilhaft wird die Temperatur des in dem Ausgleichsbehälter befindlichen Luftvolumens mittels einer Heizvorrichtung auf der Temperatur der Innenwand des Prüflings gehalten. Dabei ist es vorteilhaft, wenn die Heizeinrichtung von einem Regler angesteuert wird. Diese Regelung nutzt die gemessene Wandtemperatur als Führungsgröße. Da wegen der Wärmeträgheit schnelle Temperaturänderungen ausgeschlossen werden können, ist es hinreichend, wenn bei Prüfungen im Takt die Temperatur der Innenwandung des nächsten zu prüfenden Rohres als diese Führungsgröße genommen wird. Weiter ist vorteilhaft ein mit einem Bypassventil absperrbarer Aufheizkreislauf vorgesehen, durch den während der Pause des Wechselns der Prüflinge die Luft des Ausgleichsbehälters zirkuliert, und in den die Heizeinrichtung eingeschaltet ist. Dieser Aufheizkreislauf ist parallel zum Prüfling geschaltet.

Bei dem Austausch der Luft ist bedeutsam, Vermischungen zu unterdrücken; dazu wird die Luft in den Prüfling und/oder in den Ausgleichsbehälter im Wesentlichen stoßfrei eingeführt. Die auszutauschende Luft strömt nach einer Weiterbildung aus dem Ausgleichsbehälter in den Prüfling über und in diesen im Bereich des oberen Rohrscheitels ein. Das Ausströmen erfolgt dabei im Bereich des unteren Rohrscheitels. Alternativ strömt die aus dem Ausgleichsbehälter in den Prüfling überströmende Luft in diesen in einer im Wesentlichen quasi-laminaren oder turbulenzarmen Verdrängungsströmung ein, wobei vorteilhaft diese Strömungen auch für den Ausgleichsbehälter vorgesehen wird.

Die Beobachtung des Prüfunterdruckes über die Zeit kann beginnen. Während der Zeitdauer des gesamten Prüfzyklus, die nicht zum Austausch der Luftvolumina benötigt wird, kann nun die abgekühlte Luft des Prüflings, die in den Ausgleichsbehälter gefördert wurde, sich an die Temperatur angleichen bzw. angeglichen werden, so dass diese für den Austausch in einem nächsten Prüfzyklus zur Verfügung steht.

Die Vakuumprüfvorrichtung selbst ist beispielsweise aus DE 43 07 283 A bekannt; sie hat ein Auflager, auf das der Prüfling aufgelegt (oder aufgestellt) wird. Dieser Prüfling wird beidseits abgedichtet; dazu sind Stirn- oder Endplatten vorgesehen, die gegen dessen offenen Ende gepresst werden. Eine der Stirnplatten ist mit einer Vakuumpumpe verbunden, mit deren Hilfe ein gewisser Unterdruck im Prüfling erzeugt werden kann. Ein Manometer dient als Mittel zum Messen des Unterdruckes und zum Überwachen des Unterdruckes auf Veränderungen, wobei sich diese infolge der durch Undichtheiten einströmende Luft als Verringerung des Unterdruckes gegenüber dem Außendruck bemerkbar machen.

Um den Einfluss temperaturbedingter Druckänderungen auszuschalten, wird dem Prüfling ein Ausgleichsbehälter zugeordnet, der über Rohrleitungen mit Absperrventilen beidseits an den Prüfling angeschlossen ist. Prüfling, Ausgleichsbehälter und Rohrleitungen bilden dabei einen geschlossenen Luftkreislauf. Druck und Temperatur werden dabei zuzumindest im Ausgleichsbehälter überwacht: dazu weist dieser ein Druckmessgerät und/oder ein Temperaturmessgerät auf. Die Vakuumpumpe wird an eine der Rohrleitungen angeschlossen, so dass sich eine gesonderte Durchführung für den Vakuumstutzen erübrigt. Zumindest in einer der Rohrleitungen ist ein Absperrventil vorgesehen. Vorteilhaft weisen beide Rohrleitungen je ein Absperrventil auf. Um die Innendrücke von Ausgleichsbehälter und von Prüfling unabhängig voneinander einstellen zu können, ist vom Anschluss der Vakuumpumpe eine Rohrleitung mit Absperrventil zum Ausgleichsbehälter vorgesehen. Zum Austausch der abgekühlten Luft des Prüflings gegen die in dem Ausgleichsbehälter befindliche wiedererwärmte Luft ist es vorteilhaft, wenn Prüfling und Ausgleichsbehälter über die Verbindungsleitungen in einem Kreislauf angeordnet sind. Dabei ist zum Fördern der Luft im Kreislauf und zum Beschleunigen des Luftaustausches vorteilhaft im Zuge der den Kreislauf bildenden Rohre ein Kreislaufgebläse vorgesehen.

Zum Halten der Temperatur wird im Ausgleichsbehälter in diesem oder im Zuge der den Kreislauf bildenden Rohre eine Heizeinrichtung vorgesehen. Um auch einen Luft-Kreislauf unabhängig von einem angesetzten Prüfling fahren zu können, ist bei einer vorteilhaften Weiterbildung ein Bypass- oder Aufheizkreislauf mit einem Bypassventil vorgesehen. Vor einer Inbetriebnahme der Vakuum-Prüfvorrichtung kann so der Ausgleichsbehälter einschließlich der Leitungskomponenten auf die für die Dichtheitsbestimmung notwendige Temperatur gebracht werden.

Kommen die Prüflinge aus einer Fertigungsstraße mit Heizkammern mit erhöhter Temperatur, können sich die Verhältnisse umkehren: Die aus dem Ausgleichsbehälter dem Prüfling zuströmende Luft muss stärker aufgeheizt sein. Hat in diesem Fall die Wand des Ausgleichsbehälters eine Temperatur, die der des Prüflings nicht oder nicht ausreichend entspricht, wird vorteilhaft die Wand des Ausgleichsbehälters nach innen wärmeisoliert; die Wärmekapazität der Wandung das Ausgleichsbehalters ist ausgeschaltet. Die für die Wiedererwärmung notwendige Energie wird in diesem Fall ganz oder teilweise durch die in den Kurzschlusskreislauf angeordnete Heizung aufgebracht, der somit zum Aufheizkreislauf wird.

Um ein Vermischen der sowohl in den Ausgleichsbehälter oder in den Prüfling oder von beide einströmende Luft mit der dort vorhandenen Luft zu unterdrücken, sind im Einströmbereich von Prüfling und/oder Ausgleichsbehälter Luftverteileinrichtungen oder Strömungsgleichrichter vorgesehen, deren Aufgabe es ist, für ein laminares Einströmen der Luft in den Prüfling bzw. den Ausgleichsbehälter zu sorgen. Diese Mittel erlauben ein stoßfreies Einleiten der Luft und Verbessern so den Luftaustausch. Als solche Luftverteileinrichtungen oder Strömungsgleichrichter können etwa aus der Klimatechnik, bekannte koaxiale Luftdurchlässe eingesetzt werden; andere Mittel für diesen Zweck sind Verteilgitter oder ein Stapel davon, Sieb-, Gewebe- oder Filzplatten, die im Einströmbereich den Querschnitt abdecken. Alternativ können auch Strömungsschikanen vorgesehen sein, die die nachströmende Luft zwingen, die ausströmende Luft "vor sich her zu schieben".

Der Luftwechsel betrifft immer Luft unterschiedlicher Temperatur; so wird das Einströmen wärmerer Luft in den Prüfling vorteilhaft in den Bereich des oberen Rohrscheitels gelegt, während kältere Luft im Bereich des unteren Rohrscheitels ausströmt, wobei der Dichteunterschied von wärmerer und kälterer Luft vorteilhaft genutzt wird. Im Ausgleichsbehälter soll ein Vermischen einströmender kälterer Luft mit vorhandener wärmerer Luft vermieden werden. Dazu wird dieser vorteilhaft senkrecht aufgestellt, die Zuführungsleitung ist unten angeschlossen, während die zum Prüfling führende Kreislauf-Leitung oben angeschlossen ist. In vorteilhafter Ausführung ist in dem Ausgleichsbehälter eine Luftverteilvorrichtung im Bereich des Einströmens kälterer Luft angeordnet, so dass auch dort eine möglichst laminare auf die Gegenseite gerichtete Strömung erzwungen wird. In einer bevorzugten Ausführung wird die Luft auf dem Weg in bzw. durch den Ausgleichsbehälter durch Trennwände zu einer Strömung in einem Kanal mit reduziertem Querschnitt gezwungen, um die Vermischungsfront zu verkleinern.

In vorteilhafter Weiterbildung hat die Luft zu dem Zeitpunkt, da sie vom Ausgleichsbehälter in den Prüfling verbracht wird, die Temperatur der Innenwand des Prüflings bzw. wird auf diese gebracht. Dazu ist eine Heizeinrichtung vorgesehen, die im Ausgleichsbehälter und/oder in der Rohrleitung vom Prüfling zum Ausgleichsbehälter vorgesehen ist, und die vorteilhaft über eine Temperatursteuerung oder eine -regelung betätigt wird, deren Führungsgröße die von der Innenwand des Prüflings abgenommene Wandtemperatur ist. Anstelle der Temperatur der Innenwand des Prüflings selbst kann auch die Innenwand-Temperatur des Rohres genommen werden, dass als nächstes in die Vakuum-Prüfvorrichtung eingelegt wird. Die erhebliche Wärmekapazität der Wandung und die damit verbundene Wärmeträgheit erlauben dieses Vorgehen. Diese Alternative hat den Vorteil der leichteren Zugängigkeit der Messstelle. Die Regelung wird von der Innenwandtemperatur als Führungsgröße gesteuert; die Heizeinrichtung wird vom Stellglied dieses Regelkreises bedient, was eine optimale Temperatur-Einstellung sicherstellt.

Während der eigentlichen Prüfzeit, das heißt während der Zeitdauer, in der das Vakuum im Prüfling gemessen und seine Veränderung über die Zeit zur Beurteilung der Dichtheit des Prüflings beobachtet werden, ist es vorteilhaft, die Verbindungsleitungen zwischen Prüfling und Ausgleichsbehälter abzusperren. Dabei steht der Kreislauf; in dieser Zeitdauer ist für die Wiedererwärmung des in den Ausgleichsbehälter eingeströmten kälteren Luftvolumens verfügbar. Dazu wird der Ausgleichsbehälter mit seinen beiden Luftanschlüssen, dem Kreislauf-Gebläse und der Heizeinrichtung, vorteilhaft über eine absperrbare Bypassleitung zum Aufheizkreislauf verbunden, mit dem der Energieübergang von der Wand des Ausgleichsbehälters zur Luft beschleunigt wird. Für den Fall, dass die Abkühlung des Ausgleichsbehälters nach taktmäßiger Prüfung einer Anzahl von Prüflingen keine ausreichende Wiedererwärmung der abgekühlten Luft aus der Wärmekapazität seiner Wand mehr gewährleistet, ist es notwendig und vorteilhaft, in den sekundären Aufheizkreislauf eine Heizvorrichtung einzuführen, die vorteilhaft in die Temperatursteuerung einbezogen wird. Wenn die Wandung des Ausgleichsbehälters eine Temperatur hat, die der des Prüflings nicht oder nicht ausreichend entspricht, wird vorteilhaft die Wandung des Ausgleichsbehälters nach innen wärmeisoliert; wobei vorteilhaft die für die Wiedererwärmung notwendige Energiemenge, in diesem Fall ganz oder teilweise durch die in dem sekundären Aufheizkreislauf angeordnete Heizeinrichtung, aufgebracht wird.

Da sich die im Ausgleichsbehälter und seinem angeschlossenen Aufheizkreislauf befindliche Luft im Zuge der Wiedererwärmung ausdehnt und sich damit das eingestellte Druckniveau verändert, ist vorteilhaft zu der Vakuumpumpe eine Verbindungsleitung mit einem Absperrorgan vorgesehen, das zum Druckabbau kurzzeitig geöffnet wird. So können vor der Prüfung und dem Öffnen der Verbindungsleitungen zwischen Ausgleichsbehälter und Prüfling beide auf ein gleiches Unterdruck-Niveau eingestellt werden.

Die Erfindung wird an Hand der in den Figuren 1 bis 4 dargestellten Ausführungsbeispielen näher erläutert; dabei zeigen:
- Fig. 1:: Vakuumprüfvorrichtung mit Prüfling und Ausgleichsbehälter und der zugehörigen Apparatur (schematisch);
- Fig 2:: Vakuumprüfvorrichtung nach Fig. 1, Ausgleichsbehälter mit Luftzwangsführungen (schematisch);
- Fig. 3:: Vakuumprüfvorrichtung nach Fig. 1, Prüfling und Ausgleichsbehälter mit Strömungsgleichrichter im Einströmbereich (schematisch);
- Fig. 4:: Vakuumprüfvorrichtung nach Fig. 1, Prüfling mit oberer Ein- und unterer Ausströmung (schematisch).

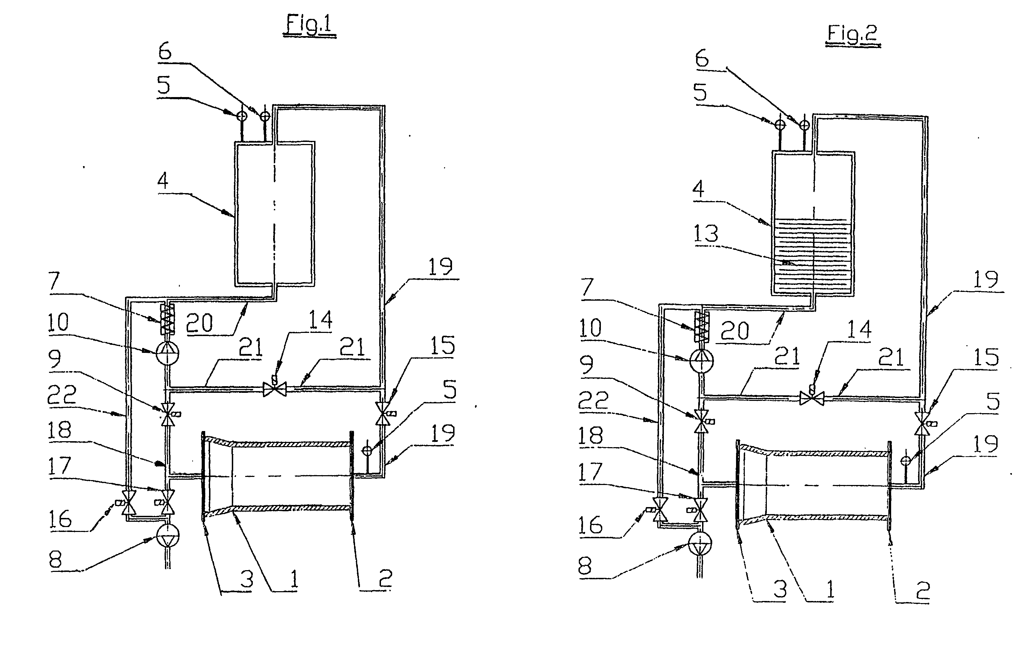

Die Figur 1 zeigt den Prüfling 1, ein Betonrohr, das zur Dichtheitsprüfung zwischen den Endplatten 2 und 3 eingespannt ist. Es versteht sich von selbst, dass diese Endplatten 2 und 3 Teile eines (nicht näher dargestellten) Prüfgestells sind, wobei das Prüfgestell auch so eingerichtet sein kann, dass eine taktweise Prüfung der Prüflinge 1 erfolgt, die auf einer Transportvorrichtung aufliegend durch das als Prüfstation im Zuge der Fertigung ausgebildete Prüfgestell transportiert werden. Über eine in die Anschlussleitung 18 geführte Stichleitung ist die Stirnplatte 3 an eine Vakuumpumpe 8 anschließbar, mit der der gewünschte oder erforderliche Prüfdruck im Inneren des Prüflings 1 einstellbar ist. Nach Erreichen des gewünschten oder erforderlichen Vakuums wird der Schieber 17 geschlossen, so dass die Verbindung zwischen Prüfling 1 und Vakuumpumpe 8 unterbrochen ist. Undichtigkeiten in der Wandung des Prüflings lassen nun Luft nachströmen, so dass das Vakuum abgebaut wird, mit der Folge, das der Druck steigt. Ein Druckwächter 5 gestattet, diese Druckänderung zu verfolgen, gegebenenfalls auch mit Fernübertragung an eine Leitstelle, in der das Ergebnis auch ausdruckbar ist.

Der Ausgleichsbehälter 4 ist über die Kreislauf-Leitung 19 mit dem Kreislauf-Ventil 15, sowie die Kreislauf-Leitung 18, das Kreislauf-Ventil 9, das Kreislauf-Gebläse 10, die Heizeinrichtung 7 und die Anschluss-Leitung 20 mit dem Prüfling verbunden. Zu Beginn der Prüfung mehrerer Prüflinge wird zunächst der Ausgleichsbehälter 4 mittels Hilfsleitung 22 und Hilfsventil 16 mit der Vakuumpumpe 8 verbunden und in dem Ausgleichsbehälter der Prüfunterdruck erzeugt. Dabei bleiben die Kreislauf-Ventile 15 und 9 geschlossen. Ist der gewünschte Unterdruck erreicht, wird das Hilfsventil 16 geschlossen. Danach wird das Kreislauf-Gebläse 10 und gegebenenfalls die Heizeinrichtung 7 sowie die zugehörige Temperaturregelung bzw. -messung aktiviert, wobei das Bypassventil 14 geöffnet wird, so dass die Luft in die Bypassleitung 21 strömt. Jetzt findet die Erwärmung der abgekühlten Luft statt.

Nachdem, wie anfangs beschrieben, der Prüfunterdruck im Prüfling erzeugt ist, werden die Kreislauf-Ventile 9 und 15 geöffnet, nachdem kurz zuvor das Bypassventil 14 geschlossen wurde. Jetzt wird das Kreislauf-Gebläse 10 aktiviert und fördert die im Prüfling befindliche Luft über die Kreislauf-Leitung 18 und die Anschluss-Leitung 20 in den Ausgleichsbehälter 4, sowie gleichzeitig die temperierte Luft aus dem Ausgleichsbehälter 4 über die Kreislauf-Leitung 19 in den Prüfling 1. Sobald dieser Vorgang abgeschlossen ist, werden die Kreislauf-Ventile 9 und 15 geschlossen, wodurch der Prüfling bei thermischem Gleichgewicht auf dem Prüfunterdruck verbleibt. Nun wird der Prüflings durch die bekannte Messtechnik beurteilt. Ab dem Zeitpunkt, da die Kreislauf-Ventile 9 und 15 geschlossen sind, kann das Bypassventil 14 wieder geöffnet werden, um den Aufheizkreislauf des Ausgleichsbehälters 4 wieder zu schließen. Nach der Beurteilung des Prüflings 1 wird der Unterdruck in ihm durch ein Belüftungsventil (nicht dargestellt) gebrochen und beide Stirnplatten 2 und 3 entfernt; ein neuer Prüfling 1 kann in die Vakuumprüfvorrichtung eingelegt werden.

Temperaturmessgeräte 6 und Druckmessgeräte 5 bestimmen Temperatur und Druck der Luft im Ausgleichsbehälter 4 bzw. im Prüfling 1. Nicht dargestellt ist die Einrichtung zur Messung der Temperatur der Innenwand des Rohres bzw. der Umgebungstemperatur. Diese sind, soll die Innenwandtemperatur des Prüflings genommen werden, als sich federnd an die Prüfling-Innenwand anlegende Temperaturfühler an den Endplatten vorgesehen. Für den Fall, dass hier die Temperatur des Folge-Rohres im Prüfzyklus genommen wird, liegt der Temperaturfühler an dessen Innenwand an. Diese Messwerte werden der Temperaturregelung der Heizeinrichtung im Kreislauf bzw. im Ausgleichsbehälter als Sollwert zugeführt.

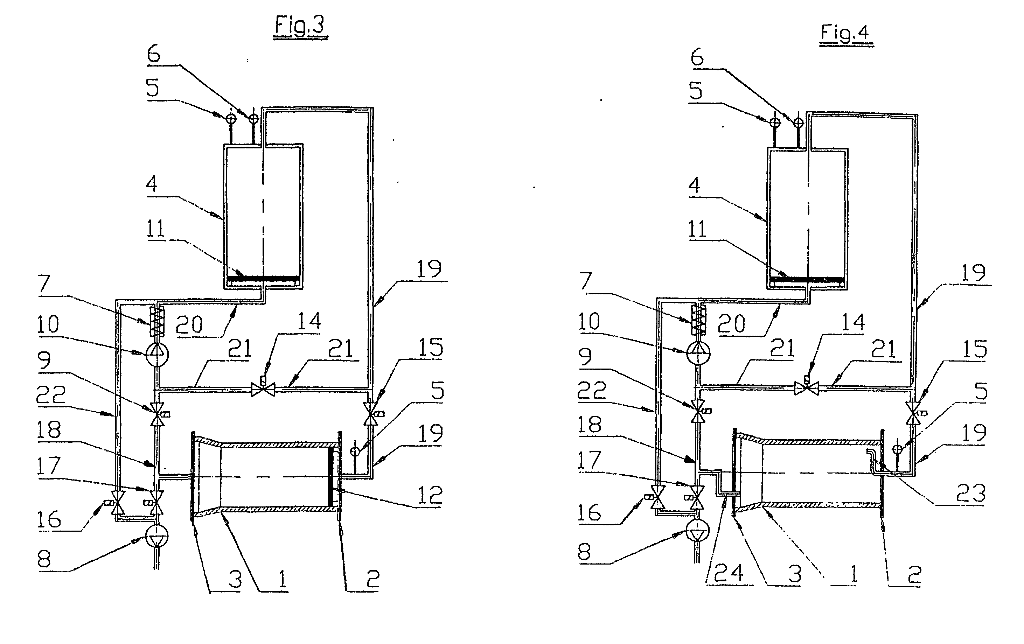

Bei dem in Figur 2 dargestellten Ausgleichsbehälter 4 sind Strömungseinsätze 13 im Einströmbereich des Ausgleichsbehälters 4 vorgesehen. Diese bewirken eine Zwangsführung der Luft im Ausgleichsbehälter, durch die die Vermischung der Luftmassen eingeschränkt wird. Die Gefahr der Vermischung der Luftmassen wird auch durch Strömungsgleichrichter 12 im Prüfling 1 bzw. im Ausgleichsbehälter 4, wie in Fig. 3 dargestellt, vermindert; die hier dargestellten Einsätze sind beispielsweise als Strömungsgleichrichter 11 bzw. 12 wirkende Filz-Scheiben. Die durch diese austretende Luft strömt (nahezu) laminar ab; hält sich diese Strömung über die gesamte Länge des Prüflings (bzw. des Ausgleichsbehälters). bildet sich eine als turbulenzarme Verdrängungsströmung bekannte Strömungsform aus, bei der Mischungsphänomene unterdrückt sind. Schließlich ist in der Fig. 4 eine Variante dargestellt, bei der die wärmere Luft am oberen Scheitelpunkt des einen Rohrendes dem Prüfling zugeführt und die abgekühlte Luft am unteren Scheitelpunkt des gegenüber liegenden Rohrendes abgeführt wird. Dazu sind beide Stirnplatten 2 und 3 des Prüflings 1 mit Z-förmig abgebogenen Rohrstutzen 23 und 24 versehen, deren offene Stutzenenden im Bereich des oberen bzw. des unteren Scheitels achsparallel ausgerichtet liegen und so das achsparallele Einströmen im oberen Rohrbereich und das ebenfalls achsparallele Absaugen im unteren Rohrbereich erlauben. Der Ausgleichsbehälter 4 ist hier mit einem Strömungsgleichrichter, entsprechend der Figur 3, versehen, mit dem eine schlichte Strömung erreicht wird, die Vermischungen weitgehend unterdrückt.

## Patentansprüche

1. Verfahren zum Prüfen von Rohren aus Beton, Ton. Steinzeug oder Guss auf Dichtheit mit Hilfe einer Vakuumprüfvorrichtung **gekennzeichnet durch** folgende Verfahrensschritte:
- in einem Ausgleichsbehälter wird ein Unterdruck erzeugt;
- die Luft in dem Ausgleichsbehälter wird auf einer Temperatur gehalten, die im Wesentlichen der Temperatur der Innenwandung des Prüflings entspricht;
- der Prüfling wird in die Vakuumprüfvorrichtung beidseitig abgedichtet eingesetzt und mit dem Ausgleichsbehälter verbunden;
- in dem Prüfling wird mittels einer angeschlossenen Vakuumpumpe ein dem Unterdruck in dem Ausgleichsgefäß entsprechender Unterdruck erzeugt;
- anschließend wird die Luft im Prüfling **durch** die im Ausgleichsbehälter enthaltende, temperierte Luft ersetzt;
- der Unterdruck des Prüflings wird nun auf Messunterdruck gebracht;
- der Druckverlauf wird über eine gewisse Messdauer beobachtet;
- bei einem Abfall des Messunterdruckes außerhalb vorgegebener Toleranzgrenzen ist das Rohr undicht und wird ausgesondert.

2. Verfahren nach Anspruch 1, **dadurch gekennzeichnet, dass** die Temperatur des in dem Ausgleichsbehälter befindlichen Luftvolumens mittels einer Heizvorrichtungen auf der Temperatur der Innenwand des Prüflings gehalten wird, wobei diese Heizvorrichtung vorzugsweise von einem Regler angesteuert wird, als dessen Führungsgröße die Temperatur der Wandung des Prüflings oder des unmittelbar vor Einbau in die Vakuumprüfvorrichtung stehenden Rohres gemessen wird.

3. Verfahren nach Anspruch 1 oder 2, **dadurch gekennzeichnet, dass** die aus dem Ausgleichsbehälter in dem Prüfling überströmende Luft in diesen im Bereich des oberen Rohrscheitels einströmt und im Bereich des unteren Rohrscheitels abgeführt wird.

4. Verfahren nach Anspruch 1 oder 2, **dadurch gekennzeichnet, dass** die in den Ausgleichsbehälter einströmende bzw. aus dem Ausgleichsbehälter in den Prüfling überströmende Luft in diesen in einer im Wesentlichen turbulenzarmen Verdrängungsströmung einströmt.

5. Verfahren nach einem der Ansprüche 1 bis 4, **dadurch gekennzeichnet, dass** die aus dem Prüfling zum Ausgleichsbehälter zurückströmende Luft in diesen im Bereich des unteren Bodens einströmt und im Bereich des oberen Bodens abgeführt wird.

6. Verfahren nach einem der Ansprüche 1 bis 4, **dadurch gekennzeichnet, dass** die aus dem Prüfling zum Ausgleichsbehälter zurückströmende Luft in diesen im Wesentlichen stoßfrei oder in Art einer im Wesentlichen turbulenzarmen Verdrängungsströmung einströmt und vorzugsweise diesen so durchströmt.

7. Vorrichtung zum Durchführen des Verfahrens nach einem der vorstehenden Ansprüche 1 bis 6 in einer Vakuumprüfvorrichtung mit einem Auflager für den Prüfling, Endplatten zum beidseitigen Abdichten des Prüflings, Vakuumpumpe zum Ziehen eines Unterdruckes in dem Prüfling, sowie mit Mitteln zum Messen des Unterdruckes, **gekennzeichnet durch** einen den Prüfling (1) und einen Ausgleichsbehälter (4) umfassenden, geschlossenen Luftkreislauf, gebildet von beidseits mit Absperrventilen (9, 15) versehenen Rohrleitungen (18, 19), die an den Prüfling (1) angeschlossen sind, wobei eine Heizeinrichtung (7) zur Temperierung der im Ausgleichsbehälter (4) enthaltenen Luft vorgesehen ist, wobei der Ausgleichsbehälter (4) je ein Messgerät für Druck (5) und Temperatur (6) aufweist, wobei die Vakuumpumpe (8) an eine der Rohrleitungen (18; 19) angeschlossen ist, und wobei zumindest in einer der Rohrleitungen (18; 19) ein Absperrventil (9; 15), vorzugsweise in beiden Rohrleitungen (18, 19) je ein Absperrventil (9, 15) vorgesehen ist/sind.

8. Vorrichtung nach Anspruch 7, **dadurch gekennzeichnet, dass** eine Bypass-Leitung (21) mit Absperrventil (14) parallel zum Prüfling (1) geschaltet ist, die einen den Ausgleichsbehälter (4) umfassenden Aufheizkreislauf schließt, in dem die Heizquelle (7) angeordnet ist.

9. Vorrichtung nach Anspruch 7 oder 8, **dadurch gekennzeichnet, dass** im Zuge der den Kreislauf bildenden Rohre (18, 19) ein Umwälzgebläse (10) vorgesehen ist.

10. Vorrichtung nach Anspruch 7, 8 oder 9, **dadurch gekennzeichnet, dass** vom Anschluss der Vakuumpumpe (8) eine mit einem Absperrventil (16) versehene Rohrleitung (22) zum Ausgleichsbehälter (4) geführt ist.

11. Vorrichtung nach einem der Ansprüche 7 bis 10, **gekennzeichnet durch** im Einströmbereich von Prüfling (1) und/oder Ausgleichsbehälter (4) vorgesehene Strömungsschikanen (13) oder einen vorzugsweise von Sieb-, Gewebe- oder Filzplatten gebildeten Strömungsgleichrichter (11).

12. Vorrichtung nach einem der Ansprüche 7 bis 11, **dadurch gekennzeichnet, dass** die eine der Stirnplatten ((2; 3) am liegend angeordneten Prüfling (1) eine in den Bereich des oberen Rohrscheitels reichende Einströmung (23) und die andere der Stirnplatten (8: 9) eine in den Bereich des unteren Rohrscheitels reichende Abströmung (24) aufweisen.

## Claims

1. Method for leak testing of pipes made of concrete, clay, ceramic or cast iron by means of a vacuum testing device, ***characterised by*** the following steps:
- producing a partial vacuum in a compensating vessel;
- holding the air in the compensating vessel at a temperature which substantially corresponds to the temperature of the inside wall of the test specimen;
- placing the test specimen in the vacuum testing device, sealed at both ends, and connecting it to the compensating vessel;
- producing a partial vacuum corresponding to the partial vacuum in the compensating vessel in the test specimen by means of a connected vacuum pump;
- subsequently replacing the air in the test specimen by the air at the' appropriate temperature in the compensating vessel;
- now bringing the partial vacuum in the test specimen to the test partial vacuum;
- observing the behaviour of the pressure for a certain length of time;
- if the test partial vacuum declines beyond specified tolerance limits, the pipe is leaky and is rejected.

2. Method as claimed in Claim 1, ***characterised in that*** the temperature of the volume of air in the compensating vessel is held by means of a heating device at the temperature of the inside wall of the test specimen, this heating device preferably being controlled by a regulator, the input variable of which is the measured temperature of the wall of the test specimen or of the pipe which is about to be fitted in the vacuum testing device.

3. Method as claimed in Claim 1 or 2, ***characterised in that*** the air which flows from the compensating vessel into the test specimen enters the latter in the region of the top pipe arch and is extracted in the region of the bottom (inverted) pipe arch.

4. Method as claimed in Claim 1 or *2, **characterised in that*** the air entering the compensating vessel or flowing from the compensating vessel into the test specimen enters the latter in the form of a substantially low-turbulence displacement flow.

5. Method as claimed in one of Claims 1 to 4. ***characterised in that*** the air which flows back from the test specimen to the compensating vessel enters the latter in the region of the upper plate and is extracted in the area of the upper plate.

6. Method as claimed in one of Claims 1 to 4, ***characterised in that*** the air which flows back from the test specimen to the compensating vessel substantially enters the latter in a surge-free manner or in the form of a substantially low-turbulence displacement flow and preferably flows through it in this form.

7. Device for performing the method as claimed in any one of the preceding Claims 1 to 6 with a support for the test specimen, end plates for sealing the test specimen at both ends, a vacuum pump for creating a partial vacuum in the test specimen and means for measuring the partial vacuum, ***characterised by*** a closed air circuit including the test specimen (1) and a compensating vessel (4), formed by pipe runs (18, 19) provided at both sides with isolating valves (9; 15), which pipe runs are connected to the test specimen, a heating device (7) for adjusting the temperature of the air in the compensating vessel (4) to the correct value, the compensating vessel (4) having a pressure measuring device (5) and a temperature measuring device, the vacuum pump (8) being connected to one of the pipe runs (18: 19), and with an isolating valve (9: 15) being provided in at least one of the pipe runs (18: 19), with an isolating valve (9, 15) preferably being provided in each of the two pipe runs (18, 19).

8. Device as claimed in Claim 7, ***characterised in that*** a by-pass (21) with isolating valve (14) runs parallel to the test specimen (1), which by-pass closes the heating circuit which includes the compensating vessel and in which the heat source (7) is located.

9. Device as claimed in Claim 7 or 8, ***characterised in that*** a circulating fan (10) is provided in the course of the pipes (18, 19) which form the circuit.

10. Device as claimed in Claims 7, 8 or 9, ***characterised in that*** a pipe run (22) provided with an isolating valve (16) runs from the connection of the vacuum pump (8) to the compensating vessel (4).

11. Device as claimed in any one of Claims 7 to 10, ***characterised by*** flow chicanes (13) provided in the inlet area of the test specimen (1) and/or the compensating vessel (4) or a flow rectifier (11) preferably formed by perforated plates, fabric pads or felt pads.

12. Device as claimed in any one of Claims 7 to 11. ***characterised in that*** the one end plate (2: 3) positioned against the horizontally placed test specimen (1) has an inflow (23) extending into the area of the top pipe arch and the other end plate (8: 9) has an outflow (24) extending into the area of the bottom (inverted) pipe arch.

## Revendications

1. Procédé de contrôle d'étanchéité de tuyaux en béton, argile. grès-cérame ou fonte au moyen d'un dispositif de contrôle sous vide, **caractérisé par** les opérations suivantes de procédé :
- une dépression est produite dans une cuve de compensation ;
- l'air contenu dans la cuve de compensation est maintenu à une température qui correspond sensiblement à la température de la paroi intérieure du spécimen ;
- le spécimen est placé dans le dispositif de contrôle sous vide avec une étanchéité assurée des deux côtés et est relié à la cuve de compensation ;
- une dépression correspondant à la dépression dans la cuve de compensation est produite dans le spécimen au moyen d'une pompe à vide raccordée ;
- ensuite, l'air contenu dans le spécimen est remplacé par l'air en équilibre de température contenu dans la cuve de compensation ;
- la dépression du spécimen est alors amenée à une dépression de mesure ;
- la variation de pression est observée pendant une certaine durée de mesure ;
- en cas de chute de la dépression de mesure en dehors de limites de tolérance préfixées, le tuyau est non étanche et est mis à l'écart.

2. Procédé suivant la revendication 1, **caractérisé en ce que** la température du volume d'air se trouvant dans la cuve de compensation est maintenue à la température de la paroi intérieure du spécimen au moyen d'un dispositif de chauffage, ce dispositif de chauffage étant de préférence commandé par un régulateur, la température de la paroi du spécimen ou du tuyau se présentant directement avant la mise en place dans le dispositif de contrôle sous vide étant mesurée en tant que grandeur pilote pour ce régulateur.

3. Procédé suivant la revendication 1 ou 2, **caractérisé en ce que** l'air passant dans le spécimen en provenance de la cuve de compensation pénètre dans ce spécimen dans la zone de la génératrice supérieure du tuyau et est évacué dans la zone de la génératrice inférieure du tuyau.

4. Procédé suivant la revendication 1 ou 2, **caractérisé en ce que** l'air pénétrant dans la cuve de compensation ou passant dans le spécimen en provenance de la cuve de compensation pénètre dans ce spécimen suivant un écoulement de refoulement sensiblement dépourvu de turbulence.

5. Procédé suivant l'une des revendications 1 à 4, **caractérisé en ce que** l'air revenant de la cuve de compensation en provenance du spécimen pénètre dans la cuve dans la zone du fond inférieur et en est évacué dans la zone du fond supérieur.

6. Procédé suivant l'une des revendications 1 à 4, **caractérisé en ce que** l'air revenant du spécimen vers la cuve de compensation pénètre dans celle-ci, et de préférence la traverse, sensiblement sans à-coups ou à la façon d'un écoulement de refoulement sensiblement dépourvu de turbulence.

7. Dispositif de mise en oeuvre du procédé suivant l'une des revendications précédentes 1 à 6 comprenant un support pour le spécimen, des plaques d'extrémité servant à assurer des deux côtés l'étanchéité du spécimen, une pompe à vide servant à extraire une dépression dans le spécimen et des moyens servant à mesurer la dépression, **caractérisé par** un circuit d'air fermé comprenant le spécimen (1) et une cuve de compensation (4) et formé de tuyauteries (18, 19) pourvues des deux côtés de valves de blocage (9, 15) et raccordées au spécimen (1), tandis qu'il est prévu un dispositif de chauffage (7) qui sert à réaliser une température équilibrée de l'air contenu dans la cuve de compensation (4), la cuve de compensation (4) comprenant un appareil de mesure pour la pression (5) et un pour la température (6), la pompe à vide (8) étant raccordée à l'une des tuyauteries (18 :19) alors que, au moins dans l'une des tuyauteries (18 :19), il est prévu une valve de blocage (9 ;15). de préférence une valve de blocage (9, 15) respective dans l'une et l'autre tuyauteries (18, 19).

8. Dispositif suivant la revendication 7, **caractérisé en ce qu'**il est prévu, connectée en parallèle au spécimen (1), une tuyauterie de dérivation (21) qui comporte une valve de blocage (14) et qui ferme un circuit de chauffage, comprenant la cuve de compensation (4), dans lequel la source de chauffage (7) est disposée.

9. Dispositif suivant la revendication 7 ou 8, **caractérisé en ce qu'**un ventilateur de recyclage (10) est prévu dans le trajet des tuyauteries (18, 19) formant le circuit.

10. Dispositif suivant la revendication 7. 8 ou 9, **caractérisé en ce qu'**une tuyauterie (22) pourvu d'une valve de blocage (16) mène du raccord de la pompe à vide (8) à la cuve de compensation (4).

11. Dispositif suivant l'une des revendications 7 à 10, **caractérisé par** des chicanes d'écoulement (13) prévues dans la zone d'entrée du spécimen (1) et/ou de la cuve de compensation (4) ou par un redresseur d'écoulement (11) formé de préférence par des plaques de tamis, de toile ou de feutre.

12. Dispositif suivant l'une des revendications 7 à 11, **caractérisé en ce que** l'une des plaques frontales (2 ; 3) situées sur le spécimen (1) disposé d'une manière couchée comprend une entrée d'écoulement (23) débouchant dans la zone de la génératrice supérieure du tuyau et l'autre plaque frontale (8 ; 9) comporte une sortie d'écoulement (24) débouchant dans la zone de la génératrice inférieure du tuyau.
